# EUROPEAN PATENT SPECIFICATION

(11) **EP 2 255 284 B1**
(45) Date of publication and mention of the grant of the patent: **11.01.2017**
(21) Application number: 09722965.2
(22) Date of filing: 02.02.2009
(51) Int. Cl.: G06F 9/455

(54) **METHOD AND SYSTEM FOR DETECTING THE INSTALLATION AND USAGE OF SOFTWARE IN AN APPLICATION VIRTUALIZATION ENVIRONMENT**
VERFAHREN UND SYSTEM ZUR ERKENNUNG VON SOFTWAREINSTALLATION UND NUTZUNG IN EINER ANWENDUNGSVIRTUALISIERUNGSUMGEBUNG
PROCÉDÉ ET SYSTÈME POUR DÉTECTER L'INSTALLATION ET L'UTILISATION D'UN LOGICIEL DANS UN ENVIRONNEMENT DE VIRTUALISATION D'APPLICATION

(30) Priority: 20.03.2008 EP 08153051
(43) Date of publication of application: 01.12.2010
(73) Proprietor: International Business Machines Corporation, Armonk, NY 10504 (US)
(72) Inventor: SALERNO, Paolo, 00015 Monterotondo (RM) (IT); ROSATI, Leonardo, 00176 Rome (IT); PERRONE, Antonio, 00167 Roma (IT)
(74) Representative: Klett, Peter Michael
(86) International application number: PCT/EP2009/051157
(87) International publication number: WO 2009/115367

(56) References cited:
- WO-A1-95/34857
- US-A1- 2006 107 256
- SALAMONE S: "CONTROL SOFTWARE COSTS" BYTE, MCGRAW-HILL INC. ST PETERBOROUGH, US, vol. 20, no. 4, 1 April 1995 (1995-04-01), pages 75-78,80,82, XP000501819 ISSN: 0360-5280

## Description

### Technical Field

The present invention relates to a method, system and computer program for detecting the installation of software in an application virtualization environment. The present invention further relates to detecting the use of such software.

### Background

At present, all applications deployed in a typical production environment must coexist in a common runtime environment, which is the operating system in which they have been installed. However, the installation of a new application typically damages an existing environment. As a result, already-tested applications can potentially conflict. Thus, greater IT resources are required to validate a production environment every time a new product is installed thereto or patched.

This problem is partially addressed with the use of Virtualization technology at operating system level (e.g. VMWare, MS Virtual Server etc.) There are currently a number of products available like IBM Progressive Deployment System (PDS) (http://web.opensource.ibm.com/www/pds/) or Microsoft Softricity (http://www.softricity.com/) that solve the above problem using an application virtualization approach. Under this approach, whilst deployed applications share operating system and hardware settings with other applications, they also run in a virtual environment, working on their own private virtual files, directories and registries that define the application environment.

These applications are typically downloaded from a central repository, which stores all the available applications together with their own working environments. In this way, all the test and maintenance resources for each product are centralized but independent of the other deployed applications.

However, this new approach creates problems for license tools that detect the installation and use of software products. At present, a usage signature is used to determine if an application is running on a target machine and an installation signature is used to determine if the product is simply installed on the target machine. However, products that create Application Virtualization Environments do not register an installed application in operating system registries (i.e. through registry keys); and do not execute any kind of explicit installation action (i.e. launching an installer) that would track the product installation. This behavior prevents a classic, not-instrumented license tool from identifying installed software. Similarly, the products that create Application Virtualization Environments do not necessarily run an application executable file name and size in the manner it would in a normal environment. This behavior prevents a classic, not-instrumented license tool from identifying the software that is running on a machine.

### Summary of the invention

According to the invention there is provided a method of detecting in an application virtualisation environment, the installation of a software application comprising a plurality of application components and an identifying component, the plurality of application components and the identifying component being stored in a first repository (22), a catalog (24) of signatures of software applications installed in a plurality of recipient computers, being provided, said method comprising:
a) storing in the catalog (24) a unique identifier computed from the identifying component for the software application;
b) providing a copy of the catalog (24) modified in the storing step to the plurality of recipient computers;
c) selecting a one or more of the recipient computers (16);
d) extracting the identifier of the software application from the provided copy of the updated catalog (24) of the one or more recipient computers (16);
e) interrogating the one or more selected recipient computers (16) to ascertain whether the one or more selected recipient computers (16) contains the identifying component corresponding to the extracted identifier; and
f) deciding that the software application is installed on one or more selected recipient computers (16), in the event that the identifying component of said software application is found on the one or more selected recipient computers (16).

Another aspect of the present invention provides a computer program for performing the above described method.

A further aspect of the present invention provides a system including means adapted to perform the steps of the above described method.

A still further aspect of the present invention provides a service deployed in a data processing system for performing the above described method.

The preferred embodiment allows licence tools to detect the installation of software that is not physically installed on an machine when an Application Virtualization Environments is used. Similarly, the preferred embodiment allows licence tools to detect the use of the software. To this end, the preferred embodiment defines a new kind of signature, namely a virtual installation signature. The virtual installation signature can be optionally used by a license tool to report installations performed in Application Virtualization Environments in a different way (i.e. because the business meaning and cost of a virtualized installation is different from a regular one).

### Brief description of the drawings

An embodiment of the invention will herein be described by way of example only, wherein:
Figure 1 is a block diagram of a network employing a license manager tool;
Figure 2 is a schematic of a method of detecting installed software in accordance with the method of the preferred embodiment within a progressive download scheme;
Figure 3 is a schematic of a method of detecting use of software in accordance with the method of the preferred embodiment within a progressive download scheme; and
Figure 4 is a block diagram of a computer system adapted to support the preferred embodiment.

### Detailed description of the invention

### 1. Overview

The preferred embodiment leverages the basic elements of an Application Virtualization Environment to solve the above-mentioned problems of detecting the installation and use of software. For the sake of example, the preferred embodiment is described with reference to the IBM Progressive Deployment System (PDS). However, it will be appreciated that the preferred embodiment is also applicable to a wide variety of Application Virtualization Environments.

Thus, using the above-mentioned IBM Progressive Deployment System (PDS) example, the preferred embodiment is based on the IBM Tivoli License Compliance Manager architecture. As before, the IBM Tivoli Licence Compliance Manager is used only for the purposes of example. In particular, it will be understood that the preferred embodiment is in no way limited to the IBM Tivoli Licence Manager. Instead, it will be understood that the preferred embodiment is equally applicable to any license manager tool. The IBM Tivoli License Manager is a license tool that provides software inventory, use metering, and license allocation services on distributed platforms. All these functions base their recognition of software products installed or, in use, on the information defined in a software catalog.

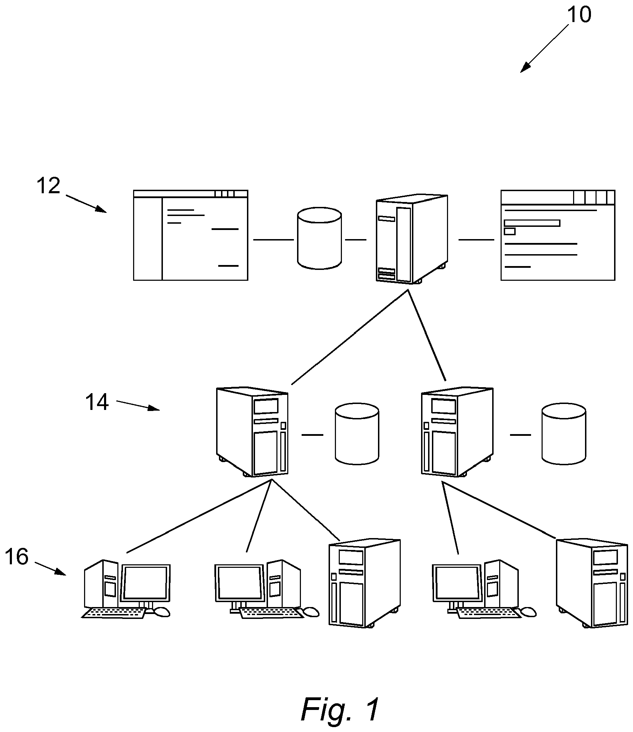

Referring to Figure 1, a network employing a license manager 10 has a three-tiered architecture comprising an administration centre 12, run-time servers 14 and target computers 16. The administration center 12 contains a one or more catalogs, listing installation details (i.e. registry keys) and usage signatures (i.e. executable files). In use, copies of the catalogs are downloaded to target computers 16 (to form local copies of the catalog(s)). Each target computer 16 comprises at least one agent which detects software installation and use by matching the software with the details in the local copy of the catalog.

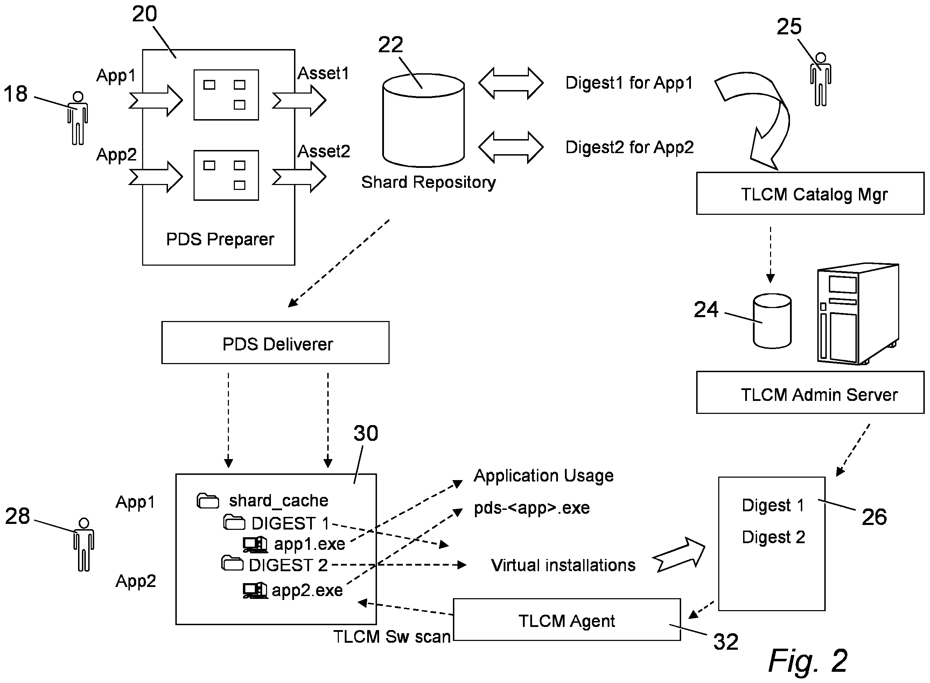

One of the main principles underlying an Application Virtualization Environment is the idea that an application can be packaged into one or more packages ("Assets" in PDS). Each package contains a plurality of pieces ("Shards" in PDS) of the application, wherein an individual piece is known as a dice. Referring to Figure 2, individual dice are retained in a shard repository 22. Thus, in use, a user creates packages from the application dices stored in the repository. Each package also contains a main dice, which contains relevant information about the product it represents and about the other dice, (in PDS, when the shards are stored in a "shard repository", the main dice is called a "root metashard"). To ensure that the main dice uniquely identifies its application over all the other packaged applications, the main dice is a file whose name is an identifying signature.

Returning to Figure 1, progressive download is a process in which the dices are downloaded one by one to a target computer 16, according to the requirements of the relevant application. However, the main dice is the first to be downloaded to the target computer 16. The main dice is then stored locally on the recipient target computer 16 as a file whose name is that of the main dice itself. In most of the application virtualization environments (like PDS) the executable file, once in execution, can be viewed as a process by other applications running as native applications (in PDS the name of the process is pds-<name-of-the-exe-file>).

### 2. Detailed Description

The preferred embodiment essentially uses the identifying signature of a main dice, present on a target computer 16 when an application is deployed and executed therein, to detect the installation of the application. In particular, the preferred embodiment adds the identifying signature to the catalog in the administration center 12, as a new type of signature to identify "virtualized installations". This so-called virtual installation signature flags that an application is virtually installed on a target machine and running therein. Thus, when a virtualized application is executed on a target machine for the first time, (and the main dice is downloaded and saved therein as a file), an agent in the recipient target machine will be able to discover this file in the target machine's file system and match it with a corresponding entry in the local copy of the catalog to detect the virtualized installation.

Referring to Figure 2, in use, a first user 18 (e.g. systems administrator) uses (for example) a PDS preparer 20 to convert two (for example) applications (App1, App2) to two packages (Asset1, Asset2). The packages and associated main dice (Digest1, Digest2) for each application (App1, App2) are stored in the repositary 22. A server catalog (e.g. a TLCM catalog manager) is provided with two new entries, one for each dice, representing the products being monitored. At periodic intervals, copies of the catalog (and associated copies 26 of the main dice (Digest1, Digest2)) are copied to potential target computers (not shown) for the applications.

In use, a second user's 28 browser (in a target machine) is directed to the repository 22, and the second user 28 is shown a list 30 of all the available applications. When the user selects a particular application, the relevant dices are downloaded (e.g. through a PDS deliverer) to the target machine. When a minimal necessary set of dices have been downloaded to the target machine, the application can then be run thereon. An agent 32 on the target machine performs, for example, a TLCM software scan of the target machine. During this scan, the agent 32 compares the locally stored copy of the main dice with the local copy of identifying signatures in the catalog downloaded from the server catalog 24.

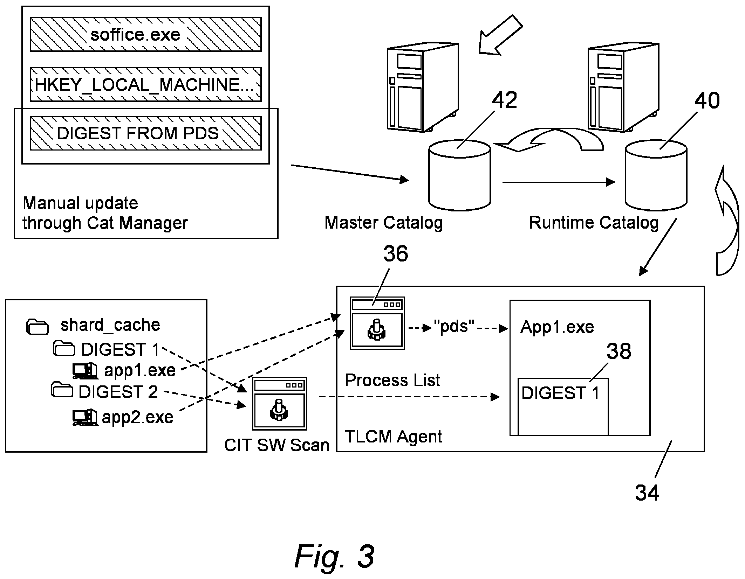

The preferred embodiment also provides two mechanisms for detecting the use of software in an Application Virtualization Environment. Referring to Figure 3, in the first mechanism, the preferred embodiment detects avirtualized application through a native process, in which the preferred embodiment looks at the active processes running on the target computer 34 (i.e. an agent on a target computer 34 obtains a list of active processes) to look for an application whose name matches that of the main dice (in the local [runtime] copy 40 of the master catalog 42). In doing so, this approach uses a special logic to remove the effect of virtual environment modifications (i.e. cutting away "pds-" in PDS and retrieving the name of the original file).

In the second mechanism, the application of interest is instrumented. In other words, the application is modified by the vendor to advise the licence manager when the application is starting. Thus, thus the licence manager does not need to check the process list to determine whether the application is running.

### Generic Computer System

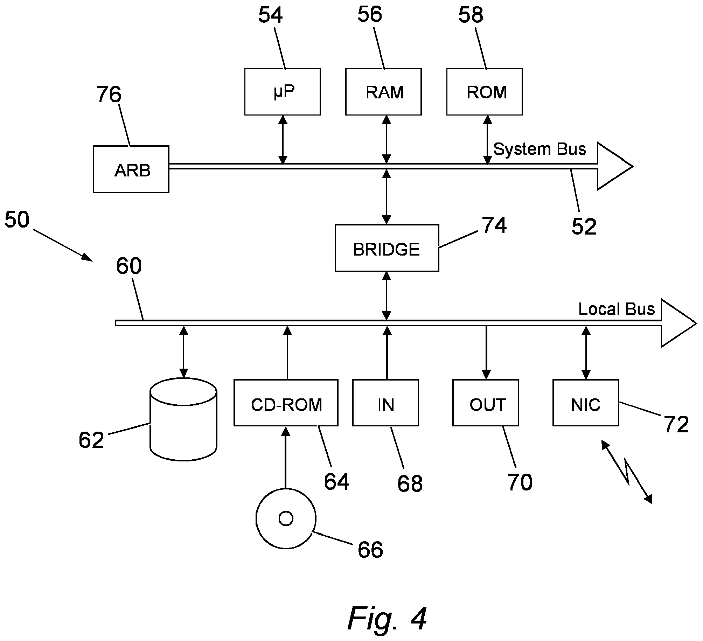

Referring to Figure 4, a generic computer system 50 adapted to support the preferred embodiments is formed by several units that are connected in parallel to a system bus 52. In detail, one or more microprocessors (*µ*P) 54 control operation of the computer 50; a RAM 56 is directly used as a working memory by the microprocessors 54, and a ROM 58 stores basic code for a bootstrap of the computer 50. Peripheral units are clustered around a local bus 60 (by means of respective interfaces). Particularly, a mass memory consists of a hard-disk 62 and a drive 64 for reading CD-ROMs 66. Moreover, the computer 50 includes input devices 68 (for example, a keyboard and a mouse), and output devices 70 (for example, a monitor and a printer). A Network Interface Card (NIC) 72 is used to connect the computer 50 to the network. A bridge unit 74 interfaces the system bus 52 with the local bus 60. Each microprocessor 54 and the bridge unit 74 can operate as master agents requesting an access to the system bus 52 for transmitting information. An arbiter 76 manages the granting of the access with mutual exclusion to the system bus 52.

Similar considerations apply if the system has a different topology, or it is based on other networks. Alternatively, the computers have a different structure, include equivalent units, or consist of other data processing entities (such as PDAs, mobile phones, and the like).

Modifications and alterations may be made to the above without departing from the scope of the invention.

## Claims

1. A method of detecting in an application virtualisation environment, the installation of a software application comprising a plurality of application components and an identifying component, the plurality of application components and the identifying component being stored in a first repository (22), a catalog (24) of signatures of software applications installed in a plurality of recipient computers, being provided, said method comprising:
a) storing in the catalog (24) a unique identifier computed from the identifying component for the software application;
b) providing a copy of the catalog (24) modified in the storing step to the plurality of recipient computers;
c) selecting a one or more of the recipient computers (16);
d) extracting the identifier of the software application from the provided copy of the updated catalog (24) of the one or more recipient computers (16);
e) interrogating the one or more selected recipient computers (16) to ascertain whether the one or more selected recipient computers (16) contains the identifying component corresponding to the extracted identifier; and
f) deciding that the software application is installed on one or more selected recipient computers (16), in the event that the identifying component of said software application is found on the one or more selected recipient computers (16).

2. The method as claimed in claim 1, wherein the steps d), e), f) comprise the step of executing these steps by an agent (32) in the selected recipient computer (16).

3. The method as claimed in claim 1 or claim 2 wherein
- the step a) comprises the preceding step of forming the identifier from a name of the identifying component; and,
- the step e) comprises the preceding step of retrieving the identifying component name from the identifier.

4. The method as claimed in any one of the preceding claims wherein the method comprises the preceding steps of:
- dividing the application into a plurality of application components;
- providing an identifying component for the application;
- storing the application components and the identifying component in the first repository (22).

5. A method of detecting the usage of a software application in an application virtualisation environment, the method comprising the steps of:
- executing the method as claimed in any one of claims 1 to 4;
- replacing the steps e) and f)
with the steps of:
- interrogating a list of the processes currently running on the one or more selected recipient computers (34) to ascertain whether the list comprises a process of the identifying component corresponding to the extracted identifier; and
- deciding that the one or more selected recipient computers (34) is currently using the software application, in the event that a process of the identifying component of said software application is found on the one or more selected recipient computers (16).

6. The method as claimed in claim 5, wherein the steps of:
- interrogating a list of the processes currently running on the one or more selected recipient computers (34) to ascertain whether the list comprises a process of the identifying component corresponding to the extracted identifier; and
- deciding that the one or more selected recipient computers (34) is currently using the software application, in the event that a process of the identifying component of said software application is found on the one or more selected recipient computers (16);
comprise the step of executing these steps by an agent (32) in the selected recipient computer (16).

7. The method as claimed in claim 5 or claim 6 wherein
- the step a) comprises the preceding step of forming the identifier from a name of the identifying component; and,
- the step e) comprises the preceding step of retrieving the identifying component process name from the identifying component name itself retrieved from the identifier.

8. The method as claimed in any one of claims 5 to 7 wherein the method comprises the preceding steps of:
- dividing the application into a plurality of application components;
- providing an identifying component for the application;
- storing the application components and the identifying component in the first repository (22).

9. A system for detecting the installation of a software application in an application virtualisation environment comprising means adapted for carrying out the method according to any one of claims 1 to 4.

10. A system for detecting the usage of a software application in an application virtualisation environment, comprising means adapted for carrying out the method according to any one of claims 5 to 8.

11. A computer program product for detecting the installation of a software application in a virtualisation environment comprising programming code instructions for executing the steps of the method according to any one of claims 1 to 4 when said program is executed on a computer.

12. A computer program product for detecting the use of a software application in a virtualisation environment comprising programming code instructions for executing the steps of the method according to any one of claims 5 to 8 when said program is executed on a computer.

## Patentansprüche

1. Verfahren zum Erkennen der Installation einer Software-Anwendung in einer Anwendungs-Virtualisierungsumgebung, wobei die Software-Anwendung eine Vielzahl von Anwendungskomponenten und eine Identifizierungskomponente umfasst, die in einer ersten Datenablage (22) gespeichert werden, wobei ein Katalog (24) von Signaturen der Software-Anwendungen bereitgestellt wird, die in einer Vielzahl von bereitgestellten Empfangs-Computern installiert sind, wobei das Verfahren umfasst:
a) Speichern einer eindeutigen Kennung in dem Katalog (24), der von der Identifizierungskomponente für die Software-Anwendung berechnet wird;
b) Bereitstellen einer Kopie des in dem Schritt des Speicherns veränderten Katalogs (24) an die Vielzahl von Empfangscomputern;
c) Auswählen eines oder mehrerer Computer aus den Empfangscomputern (16);
d) Extrahieren der Kennung der Software-Anwendung aus der bereitgestellten Kopie des aktualisierten Katalogs (24) des einen oder der mehreren Empfangscomputer (16);
e) Abfragen des einen oder der mehreren ausgewählten Empfangscomputer (16) zum Sicherstellen, dass der eine oder die mehreren ausgewählten Empfangscomputer (16) die Identifizierungskomponente enthalten, die mit der hergeleiteten Kennung übereinstimmt; und
f) Entscheiden, dass die Software-Anwendung auf einem oder mehreren ausgewählten Empfangscomputern (16) installiert ist, falls die Identifizierungskomponente der Software-Anwendung auf dem einen oder den mehreren ausgewählten Empfangscomputern (16) gefunden wird.

2. Verfahren nach Anspruch 1, wobei die Schritte d), e), f) den Schritt des Ausführens dieser Schritte durch einen Agenten (32) in dem ausgewählten Empfangscomputer (16) umfassen.

3. Verfahren nach Anspruch 1 oder Anspruch 2, wobei
- der Schritt a) den vorhergehenden Schritt des Bildens der Kennung aus einem Namen der Identifizierungskomponente umfasst; und
- der Schritt e) den vorhergehenden Schritt des Abrufens des Namens der Identifizierungskomponente aus der Kennung umfasst.

4. Verfahren nach einem der vorhergehenden Ansprüche, wobei das Verfahren die vorhergehenden Schritte umfasst:
- Teilen der Anwendung in eine Vielzahl von Anwendungskomponenten;
- Bereitstellen einer Identifizierungskomponente für die Anwendung;
- Speichern der Anwendungskomponenten und der Identifizierungskomponente in der ersten Datenablage (22).

5. Verfahren zum Erkennen der Verwendung einer Software-Anwendung in einer Anwendungs-Virtualisierungsumgebung, wobei das Verfahren die Schritte umfasst:
- Ausführen des Verfahrens nach einem der Ansprüche 1 bis 4;
- Ersetzen der Schritte e) und f) durch die Schritte:
- Abfragen einer Liste der momentan ausgeführten Prozesse auf dem einen oder den mehreren Empfangscomputern (34) zum Sicherstellen, dass die Liste einen Prozess der Identifizierungskomponente umfasst, die zu der extrahierten Kennung gehört; und
- Entscheiden, dass der eine oder die mehreren ausgewählten Empfangscomputer (34) momentan die Software-Anwendung verwenden, falls ein Prozess der Identifizierungskomponente der Software-Anwendung auf dem einen oder den mehreren ausgewählten Empfangscomputern (16) gefunden wird.

6. Verfahren nach Anspruch 5, wobei die Schritte des:
- Abfragens einer Liste der momentan auf dem einen oder den mehreren Empfangscomputern (34) ausgeführten Prozesse zum Sicherstellen, dass die Liste einen Prozess der Identifizierungskomponente umfasst, die mit der extrahierten Kennung übereinstimmt; und
- Entscheidens, dass der eine oder die mehreren Empfangscomputer (34) momentan die Software-Anwendung verwenden, falls ein Prozess der Identifizierungskomponente der Software-Anwendung auf dem einen oder den mehreren ausgewählten Empfangscomputern (16) gefunden wird;
den Schritt des Ausführens dieser Schritte durch einen Agenten (32) in dem ausgewählten Empfangscomputer (16) umfassen.

7. Verfahren nach Anspruch 5 oder Anspruch 6 , wobei
- der Schritt a) den vorhergehenden Schritt des Bildens der Kennung aus einem Namen der Identifizierungskomponente umfasst; und
- der Schritt e) den vorhergehenden Schritt des Abrufens des Prozessnamens der Identifizierungskomponente aus dem Namen der Identifizierungskomponente umfasst, der seinerseits aus der Kennung abgerufen wird.

8. Verfahren nach einem der Ansprüche 5 bis 7, wobei das Verfahren die vorhergehenden Schritte umfasst:
- Teilen der Anwendung in eine Vielzahl von Anwendungskomponenten;
- Bereitstellen einer Identifizierungskomponente für die Anwendung;
- Speichern der Anwendungskomponenten und der Identifizierungskomponente in der ersten Datenablage (22).

9. System zum Erkennen der Installation einer Software-Anwendung in einer Anwendungs-Virtualisierungsumgebung, die geeignete Mittel zum Ausführen des Verfahrens nach einem der Ansprüche 1 bis 4 umfasst.

10. System zum Erkennen der Verwendung einer Software-Anwendung in einer Anwendungs-Virtualisierungsumgebung, wobei das System geeignete Mittel zum Ausführen des Verfahrens nach einem der Ansprüche 5 bis 8 umfasst.

11. Computer-Programmprodukt zum Erkennen der Installation einer Software-Anwendung in einer Anwendungs-Virtualisierungsumgebung, wobei das Computer-Programmprodukt Programm-Code-Anweisungen zum Ausführen der Schritte des Verfahrens nach einem der Ansprüche 1 bis 4 umfasst, wenn das Programm auf einem Computer ausgeführt wird.

12. Computer-Programmprodukt zum Erkennen der Verwendung einer Software-Anwendung in einer Virtualisierungsumgebung, wobei das Computer-Programmprodukt Programm-Code-Anweisungen zum Durchführen der Schritte des Verfahrens nach einem der Ansprüche 5 bis 8 umfasst, wenn das Programm auf einem Computer ausgeführt wird.

## Revendications

1. Procédé de détection dans un environnement de virtualisation d'application de l'installation d'un application logicielle comprenant une pluralité de composants d'application et un composant d'identification, la pluralité de composants d'application et le composant d'identification étant mémorisés dans un premier recueil (22), un catalogue (24) de signatures d'application logicielle installé dans une pluralité d'ordinateurs destinataires étant fourni, ledit procédé comprenant de :
a) mémoriser dans le catalogue (24) un identifiant unique calculé informatiquement à partir du composant d'identification pour l'application logicielle ;
b) fournir une copie du catalogue (24) modifiée dans l'étape de mémorisation à la pluralité d'ordinateurs destinataires ;
c) sélectionner un ou plusieurs des ordinateurs destinataires (16) ;
d) extraire l'identifiant de l'application logicielle de la copie fournie du catalogue mis à jour (24) du un ou plusieurs ordinateurs destinataires (16) ;
e) interroger le un ou plusieurs ordinateurs destinataires sélectionnés (16) pour certifier que le un ou plusieurs ordinateurs destinataires sélectionnés (16) contiennent le composant d'identification correspondant à l'identifiant extrait ; et
f) décider que l'application logicielle est installée sur un ou plusieurs ordinateurs destinataires sélectionnés (16), au cas où le composant d'identification de ladite application logicielle se trouve sur le un ou plusieurs ordinateurs destinataires (16).

2. Procédé selon la revendication 1, dans lequel les étapes d), e) et f) comprennent l'étape d'exécution de ces étapes par un agent (32) dans l'ordinateur destinataire sélectionné.

3. Procédé selon la revendication 1 ou 2 dans lequel :
- l'étape a) comprend l'étape précédente de formation de l'identifiant à partir d'un nom du composant d'identification ; et
- l'étape e) comprend l'étape précédente de récupération le nom de l'identifiant à partir du composant d'identification.

4. Procédé selon l'une quelconque des revendications précédentes, dans lequel le procédé comprend les étapes précédentes consistant à :
- diviser l'application en une pluralité de composants d'application,
- fournir un composant d'identification pour l'application ;
- mémoriser le composant d'application et le composant d'identification dans le premier recueil.

5. Procédé de détection de l'utilisation d'une application logicielle dans un environnement de virtualisation d'application, le procédé comprenant les étapes consistant à :
- exécuter le procédé selon l'une quelconque des revendications 1 à 4 ;
- remplacer les étapes e) et f) par les étapes consistant à :
- interroger une liste des processus s'exécutant actuellement sur le un ou plusieurs ordinateurs destinataires sélectionnés (34) pour certifier que la liste comprend un processus du composant d'identification correspondant à l'identifiant extrait ; et
- décider que le un ou plusieurs ordinateurs destinataires sélectionnés (34) utilisent actuellement l'application logicielle, au cas où un processus du composant d'identification de ladite application logicielle est trouvé sur le un ou plusieurs ordinateurs destinataires sélectionnés (16).

6. Procédé selon la revendication 5, dans lequel les étapes consistant à :
- interroger une liste des processus s'exécutant actuellement sur le un ou plusieurs ordinateurs destinataires sélectionnés (34) pour certifier si la liste comprend un processus du composant d'identification correspondant à l'identifiant extrait ; et
- décider que le un ou plusieurs ordinateurs destinataires sélectionnés (34) utilisent actuellement l'application logicielle, au cas où un processus du composant d'identification de ladite application logicielle est trouvé sur le un ou plusieurs ordinateurs destinataires sélectionnés (16) ;
comprend l'étape d'exécution de ces étapes par un agent (32) dans l'ordinateur destinataire sélectionné (16).

7. Procédé selon la revendication 5 ou 6, dans lequel :
- l'étape a) comprend l'étape précédente de formation de l'identifiant à partir d'un nom du composant d'identification ; et
- l'étape e) comprend l'étape précédente de récupération du nom du processus de composant d'identification à partir du nom de composant d'identification lui-même récupéré de l'identifiant.

8. Procédé selon l'une quelconque des revendications 5 à 7, dans lequel le procédé comprend les étapes précédentes consistant à :
- diviser l'application en une pluralité de composants d'application ;
- fournir un composant d'identification pour l'application ;
- mémoriser les composants d'application et le composant d'identification dans le premier recueil (22).

9. Système de détection de l'installation d'une application logicielle dans un environnement de virtualisation d'application comprenant des moyens adaptés pour mettre en oeuvre le procédé selon l'une quelconque des revendications 1 à 4.

10. Système de détection de l'utilisation d'une application logicielle dans un environnement de virtualisation d'application, comprenant des moyens adaptés pour mettre en oeuvre le procédé selon l'une quelconque des revendications 5 à 8.

11. Produit de programme informatique pour détecter l'installation d'une application logicielle dans un environnement de virtualisation comprenant de programmer des instructions de code pour exécuter les étapes du procédé selon l'une quelconque des revendications 1 à 4 quand ledit programme est exécuté sur un ordinateur.

12. Produit de programme informatique pour détecter l'utilisation d'une application logicielle dans un environnement de virtualisation comprenant de programmer des instructions de code pour exécuter les étapes du procédé selon l'une quelconque des revendications 5 à 8 lorsque ledit programme est exécuté sur un ordinateur.
